# EUROPEAN PATENT APPLICATION

(11) **EP 1 995 212 A1**
(43) Date of publication of application: **26.11.2008**
(21) Application number: 07738330.5
(22) Date of filing: 12.03.2007
(51) Int. Cl.: C01B 3/32, C01B 3/56, H01M 8/06

(54) **HYDROGEN GENERATOR AND PROCESS FOR PRODUCING HYDROGEN**

(30) Priority: 14.03.2006 JP 2006068642
(71) Applicant: Mitsubishi Gas Chemical Company, Inc., Chiyoda-ku Tokyo 100-8324 (JP)
(72) Inventor: TAKAMURA, Koki, Niigata-shi, Niigata 950-3121 (JP); OKADA, Eiji, Niigata-shi, Niigata 950-3112 (JP); IKOMA, Futoshi, Niigata-shi, Niigata 950-3112 (JP); ANDO, Tomofumi, Chiyoda-ku, Tokyo 100-8324 (JP)
(74) Representative: Gille Hrabal Struck Neidlein Prop Roos
(86) International application number: PCT/JP2007/054858
(87) International publication number: WO 2007/105696

(57) **Abstract**

A hydrogen generating apparatus composed of an autothermal-reforming catalyst layer, a conduit pipe for feeding a mixture of methanol and steam, a conduit pipe for feeding oxygen equipped with a flow regulator, and a hydrogen-permeable membrane disposed downstream of the autothermal-reforming catalyst layer. The hydrogen generating apparatus is equipped with a temperature-measuring device for measuring the temperature of the hydrogen-containing gas discharged from the autothermal-reforming catalyst layer. The amount of oxygen to be fed to the autothermal-reforming catalyst layer is increased or decreased by the flow regulator according to the measured temperature of the hydrogen containing gas. Thus, the heat generation by the autothermal reforming is controlled and the temperature of the hydrogen containing gas is regulated within a limited range so as to maintain the hydrogen separation step at an optimum temperature. With the hydrogen generating apparatus, the heat generated by the autothermal reforming reaction is effectively utilized in the hydrogen separation step without needing an additional means.

## Description

### TECHNICAL FIELD

The present invention relates to a hydrogen generating apparatus and a hydrogen generating process which includes the autothermal reforming of methanol for generating hydrogen and the hydrogen separation using a hydrogen-permeable membrane made of a palladium alloy. Hydrogen gas is widely used in chemical industries such as ammonia synthesis, hydrogenation of various organic compounds, petroleum refining and desulfurization, metallurgy industries and semiconductor industries. Hydrogen has also recently found its utility as a new energy source with increasing development of fuel cell technology. Thus, a demand for hydrogen is increasing more and more.

### BACKGROUND ART

As a conventionally widely practiced method for producing hydrogen gas, there may be mentioned, for example, a steam reforming of hydrocarbons such as liquid petroleum gas (LPG), natural gas and naphtha. This method generally requires the desulfurization of the raw material hydrocarbons and a high apparatus cost because of a high reaction temperature of 800 to 1,000°C, and therefore, is difficult to employ for small or intermediate scale production of hydrogen. A method for producing a hydrogen gas by reacting methanol with water (a steam reforming using methanol as a raw material) has merits because the raw material methanol is easily available, the reaction proceeds even at a temperature as low as 300°C or below, and no pretreatment of the raw material such as desulfurization is required. Further, this method reduces the apparatus costs and widely applicable to the small to large scale production of hydrogen gas.

The steam reforming reaction using methanol as a raw material ideally proceeds according to the following endothermic reaction as the main reaction:

CH₃OH + H₂O → 3H₂ + CO₂ -49.5 kJ/mol.

However, a small amount of carbon monoxide is by-produced, because side reactions such as a reverse shift reaction and methanol decomposition also occur.

The autothermal reforming reaction of methanol is represented by the following formula:

CH₃OH + x(1/2)O₂ + (1 - x)H₂O → (3 - x)H₂ + xCO₂ + (1 - x)CO.

In the autothermal reforming reaction, since a partial oxidation reaction of methanol (exothermic reaction) and a steam reforming reaction of methanol (endothermic reaction) simultaneously occur in the same reaction system, it is not necessary to supply heat from outside. Accordingly, in the autothermal reforming reaction, a reformed gas containing hydrogen as a main component is obtained by using an apparatus simpler than those used in the conventional steam reforming reaction of methanol. In the autothermal reforming reaction, the temperature of the catalyst layer generally reaches 300°C or higher, and the temperature of the reformed gas at the exit of the reforming reactor is governed by the balance between the exothermic and endothermic reactions. Therefore, the temperature at the exit of the reforming reactor may be controlled by adjusting the amount of oxygen (molar feeding ratio of oxygen/methanol) to be fed to the reactor. In addition to the temperature of the exit gas, the composition thereof is also changed according to the feeding amount of oxygen (molar feeding ratio of oxygen/methanol).

The hydrogen-containing reformed gas thus obtained is generally subjected to a PSA process (pressure swing adsorption) for the recovery of high purity hydrogen. PSA apparatus has a complicated structure composed of a plurality of absorbing towers each packed with an adsorbent and a large number of automatic valves for controlling the inlets and outlets thereof. Further, a hydrogen generating apparatus using a PSA process is complicated and large-sized because the separation of hydrogen by the PSA process requires cooling the reformed gas for the removal of the moisture contained therein. Therefore, it is difficult to reduce the size of the apparatus and effectively harness the energy.

A metal membrane (alloy membrane) made of an alloy of palladium with silver or copper allows the selective permeation of hydrogen therethrough and is capable of separating hydrogen in a very high purity from a hydrogen-containing gas. Since the permeation rate of hydrogen is proportional to the temperature, the metal membrane is preferably used at a temperature as high as about 200 to 500°C in order to obtain a practically acceptable hydrogen permeation efficiency. Using a hydrogen separation membrane made of a palladium alloy, it is expected that the hydrogen separation process can be carried out using a smaller apparatus in a simpler manner as compared with the PSA process. In addition, the use of such a membrane saves the energy because it is not necessary to cool the hydrogen-containing reformed gas supplied from the reforming reaction step. To obtain a practically acceptable hydrogen permeation efficiency, however, it may be necessary to heat the membrane in some cases.

The hydrogen separation step using a palladium alloy membrane is operated at a high temperature. In the above process for producing hydrogen by the steam reforming of hydrocarbons, the heat source generally disposed between the steam reforming step and the hydrogen separation step and other apparatuses can be omitted. Therefore, an attempt has been made to thermally combine the steam reforming step and the hydrogen separation step. In particular, a number of proposals have been made for the autothermal reforming reaction, because the steam reforming reaction proceeds without needing an excess external heat and the heat generated can be utilized.

For example, Patent Document 1 discloses a hydrogen production system having a hydrocarbon source, a water source, an oxygen source, a vaporization chamber and a reforming chamber provided with a catalyst and a hydrogen separation membrane, wherein the vaporization chamber and the reforming chamber are thermally connected to each other. Patent Document 2 discloses a fuel gas generation system having a reforming section for a partial oxidation reaction, a shift section for an exothermic shift reaction which is disposed downstream of the reforming section via a heat exchanger, and a hydrogen separation membrane disposed downstream of the shift section. Patent Document 3 discloses a multi-stage reforming apparatus in which a flat plate catalyst layer for reforming a fuel, a flat plate hydrogen-permeable membrane and a flat plate catalyst layer for converting carbon monoxide are stacked. It is described that the heat required for the reforming reaction is self-supplied from the exothermic partial oxidation reaction so that a means for external heating may be omitted. Patent Document 4 discloses a hydrogen gas generator having a structure (hybrid structure) in which a catalyst layer for a partial oxidation reaction is placed on a catalyst layer for a water gas shift reaction. In general, the optimum reforming reaction temperature varies according to the kind of the raw material, the kind of the reforming catalyst and the reaction conditions. Further, the hydrogen permeating efficiency of the palladium alloy membrane is influenced by the temperature. Therefore, it has been difficult to determine the conditions for the reaction and hydrogen permeation, which are optimum to the combined system of the hydrogen permeable membrane made of a palladium alloy with the autothermal reforming reaction or the partial oxidation reaction.

[Patent Document 1] JP 07-315801A
[Patent Document 2] JP 2001-223017A
[Patent Document 3] JP 3680936B2
[Patent Document 4] JP 2001-146404A

### DISCLOSURE OF THE INVENTION

As described above, in the production of hydrogen by a known combined system of the reforming reaction of methanol and the hydrogen separation membrane made of a palladium alloy, a heat source or a means for regulating the temperature is needed to optimize the temperatures of the reforming step and the hydrogen separation step. The heat may be supplied to both the steps simultaneously when both the steps are disposed closely or in contact. However, an additional means for supplying the heat is needed. When the optimum operation temperatures for the reforming step and the hydrogen separation step differ, a means for controlling temperature is needed for each step. Therefore, it is difficult to make the apparatus compact and simple.

As a result of extensive study in view of solving the above problems, the inventors have found that the heat generated in the autothermal reforming reaction step can be effectively utilized and a means for heating and a means for regulating temperature can be omitted in the hydrogen separation step, when the temperature of the autothermal reforming reaction step is controlled according to the temperature of the hydrogen-containing gas produced in that step, and when the temperature of the hydrogen separation step is optimized by utilizing the heat which is generated in the autothermal reforming reaction step and carried by the hydrogen-containing gas. The present invention has been accomplished on the basis of the above finding.

Thus, the present invention provides a hydrogen generating apparatus comprising an autothermal-reforming catalyst layer, a conduit pipe for feeding a mixture of methanol and water, a conduit pipe for feeding oxygen equipped with a flow regulator, and a hydrogen-permeable membrane made of a palladium alloy which is disposed downstream of the autothermal-reforming catalyst layer,
wherein the conduit pipe for feeding the mixture of methanol and water and the conduit pipe for feeding oxygen are disposed upstream of the autothermal-reforming catalyst layer so that the methanol, water and oxygen are supplied to the autothermal-reforming catalyst layer in a mixture,
wherein a temperature-measuring device for measuring a temperature of a hydrogen-containing gas discharged from the autothermal-reforming catalyst layer is disposed between an exit of the autothermal-reforming catalyst layer and an inlet of the hydrogen-permeable membrane, and
wherein the temperature-measuring device is connected to a controlling unit for opening and closing the flow regulator according to a measured temperature of the hydrogen-containing gas to increase or decrease an amount of oxygen to be fed.

The present invention further provides a process for generating hydrogen, comprising a reforming reaction step for subjecting methanol, water and oxygen to an autothermal reforming reaction to produce a hydrogen-containing gas and a hydrogen separation step for selectively separating and recovering hydrogen gas from the hydrogen-containing gas using a hydrogen-permeable membrane made of a palladium alloy,
wherein a temperature of the hydrogen-containing gas is measured at any position from an exit of the reforming reaction step to the hydrogen separation step, and
wherein an amount of oxygen to be fed to the reforming reaction step is increased or decreased according to a measured temperature of the hydrogen-containing gas to control a temperature of the reforming reaction step and a temperature of the hydrogen-containing gas, thereby maintaining the hydrogen separation step at an optimum temperature by utilizing a heat carried by the hydrogen-containing gas.

### BRIEF DESCRIPTION OF THE DRAWING

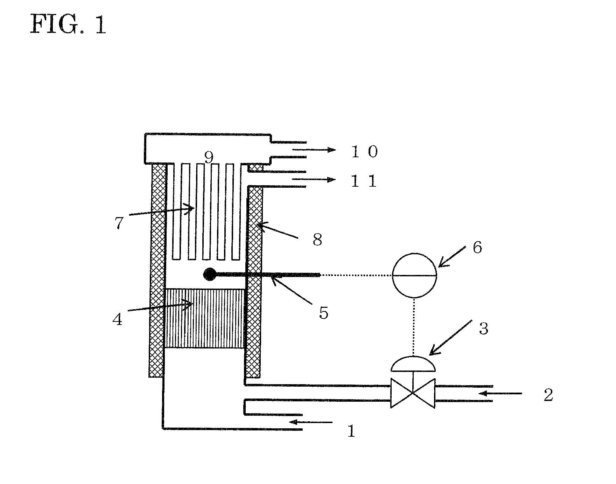

FIG. 1 is a schematic view illustrating a hydrogen generating apparatus according to the present invention.

### BEST MODE FOR CARRYING OUT THE INVENTION

The raw material used in the present invention is not specifically limited as long as it is capable of yielding hydrogen by an autothermal reforming reaction or a partially oxidative reforming reaction, with methanol being suitably used because the reaction easily proceeds and the reaction temperature is close to the operation temperature of the hydrogen separation membrane. In addition to methanol, a compound capable of forming methanol by hydrolysis, such as dimethyl ether and methylal, may be also used.
The proportion of methanol and water (steam, fog, etc.) to be brought into contact with a catalyst in the reforming reaction step is not specifically limited, and the water/methanol ratio (molar ratio) is preferably 0.01 to 10, more preferably 0.05 to 5. The proportion of methanol and water to be brought into contact with the catalyst is suitably selected from the above range according to the hydrogen partial pressure and temperature of the hydrogen-containing gas being produced, the reaction conditions, the operation conditions of the reactor, etc.

The proportion of methanol and oxygen to be brought into contact with the catalyst in the reforming reaction step is not specifically limited, and the oxygen/methanol ratio (molar ratio) is preferably 0.01 to 20, more preferably 0.05 to 2. When the amount of oxygen is excessively small, the reaction heat generated by the partial oxidation is not sufficient, to cause methanol to remain unreacted in the produced hydrogen-containing gas. The proportion of methanol and oxygen is suitably selected from the above range so that the hydrogen-containing gas produced has a temperature sufficient for controlling the temperature of the subsequent hydrogen separation step within an optimum temperature range. Since air is generally used as the oxygen source, the amount of oxygen to be fed is preferably the minimum required amount so as to maintain the hydrogen partial pressure in the hydrogen-containing gas being produced as high as possible.

The reaction temperature of the reforming reaction step of the present invention is preferably 100 to 800°C, more preferably 200 to 600°C. The reaction temperature of the reforming reaction step is selected from the above range such that the temperature of the hydrogen-containing gas (reformed gas) to be supplied to the subsequent hydrogen separation step is maintained in a range of 150 to 500°C. The reaction pressure of the reforming reaction step is preferably from atmospheric pressure to 15 MPa. The optimum pressure is selected according to the hydrogen partial pressure of the produced hydrogen-containing gas, the strength of the hydrogen-permeable membrane used in the hydrogen separation step, the degree of hydrogen recovery, etc.

The effective component of the catalyst used in the reforming reaction step is not specifically limited as long as it catalyzes the autothermal reforming reaction of methanol, water and oxygen. To provide the catalyst with a practical durability under the conditions of the autothermal reforming reaction and to allow the produced hydrogen-containing gas to carry a sufficient amount of heat, a catalyst containing Pt and/or Pd together with at least one element selected from Zn, Cr, Ga, Fe and Cu in combination is preferably used.

The catalyst used in the reforming reaction step may further contain a component inert to the reaction in addition to the effective components. The inert component may include a dispersant for dispersing the catalytic components, a molding aid, a carrier and a supporting structure, for example, silica, alumina, activated carbon, talc, graphite, a metal plate and a metal fin.

The manner of using the catalyst is not specifically limited as long as methanol, water and oxygen in the reforming reactor are brought into contact with the catalyst in a mixed state and the autothermal reforming reaction proceeds to produce the hydrogen-containing gas. For example, the catalyst is used in a fixed bed manner by fixing the catalyst to a suitable portion in the reforming reactor, in a fluidized bed manner by dispersing the catalyst in a reaction atmosphere, or in a supported catalyst manner by supporting the catalyst on a commercially available random packing or honeycomb support. In view of the pressure difference in the reforming reactor and the powdering of the catalyst, a packed catalyst of catalyst pellets and a supported catalyst on a honeycomb support are preferably used.

The hydrogen-containing gas produced in the reforming reaction step is fed to the subsequent hydrogen separation step where high purity hydrogen is separated. The hydrogen separation step is operated preferably at 150 to 500°C, more preferably at 200 to 400°C, in consideration of the strength of the hydrogen separation membrane and the strength of apparatus parts.

The hydrogen separation membrane used in the present invention is mainly made of an alloy of palladium with copper or silver. The composition of the palladium alloy is suitably selected in view of the hydrogen-permeating efficiency, resistance to catalyst poison, resistance to shrink/elongation fatigue, optimum operation temperature, etc. The palladium content of the alloy is preferably 40 to 80% by weight, more preferably 50 to 75% by weight on the basis of the total of the amount of palladium and the amount of copper or silver in consideration of the temperature of the hydrogen-containing gas at the exit of the reforming reactor.

The thickness of the hydrogen separation membrane is not specifically limited, and preferably as thin as possible because the permeation amount of hydrogen is generally inversely proportional to the thickness of the membrane. The thickness is preferably 1 to 100 µm in consideration of the amount of palladium, the practical strength of the membrane and the hydrogen permeation efficiency.

The shape of the hydrogen separation membrane is not specifically limited. A shape such as a tubular shape, a metal foil shape or a film formed on a substrate by CVD, electrolytic plating or electroless plating is suitably selected. A conduit pipe for recovering the high purity hydrogen separated through the hydrogen separation membrane and a conduit pipe for discharging the gas remaining after the separation of hydrogen are disposed downstream of the hydrogen separation step.

The temperatures of the reforming reaction step and the hydrogen separation step are controlled by adjusting the feeding amount of oxygen (oxygen/methanol molar ratio) to the reforming reaction step. When the oxygen feed source comprises a rotary machine such as a blower, the oxygen feeding amount can be controlled by adjusting the output thereof. The oxygen feeding amount may be also controlled by opening and closing a control valve disposed in a conduit pipe for feeding oxygen. The temperature of the hydrogen-containing gas (reformed gas) is measured at any position from the exit of the reforming reaction zone to the inside of the hydrogen separation zone. The oxygen feeding amount is increased or decreased according to the temperature thus measured so that the temperatures of the reforming reaction step and the hydrogen separation step fall within the above ranges. The position where the temperature is measured for controlling the oxygen feeding amount is suitably selected in consideration of the shape, structure and operation capacity of the apparatus. The preferred position is, for example, the exit of the reforming reaction step, the inlet of the hydrogen separation step and the inside of the hydrogen separation step. The oxygen feeding amount may be controlled in one stage or stepwise.

### EXAMPLES

The present invention will be described in more detail with reference to the drawing. The present invention is, however, not limited to the following embodiment.

FIG. 1 shows an example of the hydrogen generating apparatus according to the present invention. Referring to FIG. 1, a mixture of methanol and water (steam or fog) is fed through a conduit pipe 1 to the apparatus. An oxygen-containing gas such as air is fed through a conduit pipe 2 to the apparatus. The feeding amount of oxygen is controlled by a flow regulator 3. The methanol, water and oxygen fed to the apparatus are mixed downstream of the feed ports and the resulting mixture is brought into contact with an autothermal-reforming catalyst layer 4. In the catalyst layer, the autothermal reforming reaction proceeds to yield a hydrogen-containing gas (reformed gas). The hydrogen-containing gas carrying the heat generated by the autothermal reforming reaction is brought into contact with a hydrogen-permeable membrane 7 so that high purity hydrogen is separated and, at the same time, the hydrogen-permeable membrane is maintained at an optimum temperature. The hydrogen which permeates through the hydrogen-permeable membrane 7 passes a space 9 and a conduit pipe 10, thereby being introduced to the outside of the apparatus for recovery or for use in a fuel cell or the like device. The residual gas with a low hydrogen content remaining after the separation of hydrogen is introduced to the outside of the apparatus through a conduit pipe 11.

The temperature of the hydrogen-containing gas discharged from the exit of the reforming reaction step is measured, for example, by a temperature-measuring device 5 disposed between the exit of the reforming reaction step and the inlet of the hydrogen separation step. The measured temperature is inputted to a controlling device 6. The controlling device 6 opens or closes the flow regulator 3 according to the measured temperature, thereby increasing or decreasing the amount of oxygen to be fed through the conduit pipe 2. For example, when the temperature of the hydrogen-containing gas is lower than the optimum temperature for the hydrogen separation, the oxygen feeding amount is increased to allow the partial oxidation reaction to proceed predominantly, thereby raising the temperature of the autothermal-reforming catalyst layer 4 within the range mentioned above. On the other hand, when the temperature of the hydrogen-containing gas is higher than the optimum temperature for the hydrogen separation, the oxygen feeding amount is decreased to suppress the partial oxidation reaction, thereby lowering the temperature of the autothermal-reforming catalyst layer 4 within the range mentioned above. By such operations, the temperatures of the autothermal-reforming catalyst layer 4 and the hydrogen-permeable membrane 7 are easily maintained within the respective optimum ranges. Namely, in the present invention, it is not necessary to install additional heating and cooling devices for controlling the temperatures of the reforming reaction step, the hydrogen-containing gas and the hydrogen separation step. It is preferred that the entire apparatus be covered with an heat insulating material 8 in order to prevent leakage of heat to the outside as much as possible.

### INDUSTRIAL APPLICABILITY

As described above, according to the present invention, by utilizing the heat which is generated in the autothermal reforming reaction step of methanol and carried by the hydrogen-containing gas produced in that step, the temperature of the hydrogen-permeable membrane is controlled and maintained within a limited range so as to achieve a practically acceptable hydrogen permeation efficiency. The heat generated in the autothermal reforming reaction step, the temperature of the hydrogen-containing gas to be supplied to the hydrogen-permeating membrane and the temperature of the hydrogen-permeating membrane are controlled by the amount of oxygen to be supplied to the autothermal reforming reaction step. Therefore, a heating device and a cooling device for controlling the temperature of the hydrogen-containing gas are not needed. Thus, the apparatus can be made compact and simple, the control is easy, and the energy is saved. Therefore, according to the present invention, hydrogen gas is produced in an industrially advantageous manner.

## Claims

1. A hydrogen generating apparatus comprising an autothermal-reforming catalyst layer, a conduit pipe for feeding a mixture of methanol and water, a conduit pipe for feeding oxygen equipped with a flow regulator, and a hydrogen-permeable membrane made of a palladium alloy which is disposed downstream of the autothermal-reforming catalyst layer,
wherein the conduit pipe for feeding the mixture of methanol and water and the conduit pipe for feeding oxygen are disposed upstream of the autothermal-reforming catalyst layer so that the methanol, water and oxygen are supplied to the autothermal-reforming catalyst layer in a mixture,
wherein a temperature-measuring device for measuring a temperature of a hydrogen-containing gas discharged from the autothermal-reforming catalyst layer is disposed between an exit of the autothermal-reforming catalyst layer and an inlet of the hydrogen-permeable membrane, and
wherein the temperature-measuring device is connected to a controlling unit for opening and closing the flow regulator according to a measured temperature of the hydrogen-containing gas to increase or decrease an amount of oxygen to be fed.

2. The apparatus according to claim 1, wherein the autothermal-reforming catalyst layer comprises a catalyst comprising a combination of Pt and/or Pd with at least one element selected from the group consisting of Zn, Cr, Ga, Fe and Cu.

3. The apparatus according to claim 1, wherein the palladium alloy is an alloy of palladium with copper or silver and has a palladium content of 40 to 80% by weight on the basis of a total of an amount of palladium and an amount of copper or silver.

4. A process for generating hydrogen, comprising a reforming reaction step for subjecting methanol, water and oxygen to an autothermal reforming reaction to produce a hydrogen-containing gas and a hydrogen separation step for selectively separating and recovering hydrogen gas from the hydrogen-containing gas using a hydrogen-permeable membrane made of a palladium alloy,
wherein a temperature of the hydrogen-containing gas is measured at any position from an exit of the reforming reaction step to the hydrogen separation step, and
wherein an amount of oxygen to be fed to the reforming reaction step is increased or decreased according to a measured temperature of the hydrogen-containing gas to control a temperature of the reforming reaction step and a temperature of the hydrogen-containing gas, thereby maintaining the hydrogen separation step at an optimum temperature by utilizing a heat carried by the hydrogen-containing gas.

5. The process according to claim 4, wherein the autothermal reforming reaction is carried out in the presence of a catalyst mainly made of a combination of Pt and/or Pd with at least one element selected from the group consisting of Zn, Cr, Ga, Fe and Cu.

6. The process according to claim 4, wherein the palladium alloy is an alloy of palladium with copper or silver and has a palladium content of 40 to 80% by weight on the basis of a total of an amount of palladium and an amount of copper or silver.

7. The process according to claim 4, wherein a molar ratio of oxygen to methanol to be fed to the autothermal reforming reaction is controlled such that the hydrogen separation step is operated at 150 to 500°C.
